# EUROPEAN PATENT SPECIFICATION

(11) **EP 4 082 908 B1**
(45) Date of publication and mention of the grant of the patent: **06.08.2025**
(21) Application number: 22170328.3
(22) Date of filing: 27.04.2022
(51) Int. Cl.: B64D 11/06, B60N 2/75

(54) **PASSENGER UTILITY ELEMENT AND SEAT UNIT**
FAHRGASTNUTZELEMENT UND SITZEINHEIT
ÉLÉMENT D'UTILITÉ ET UNITÉ DE SIÈGE DE PASSAGER

(30) Priority: 30.04.2021 US 202117246406
(43) Date of publication of application: 02.11.2022
(73) Proprietor: Adient Aerospace, LLC, Bothell, WA 98011 (US)
(72) Inventor: Senechal, Gary, Bothell, 98011 (US); Wisniewski, Max, Bothell, 98011 (US); TSANG, Yan Winna, Bothell, WA 98011 (US)
(74) Representative: Bartelds, Erik

(56) References cited:
- EP-A1- 3 594 049
- EP-A1- 3 808 657
- WO-A1-2016/165978
- GB-A- 2 469 180
- US-A- 5 788 324
- US-A- 5 911 470
- US-A1- 2020 238 880

## Description

### BACKGROUND

Seat units, such as for an aircraft, can have a seat and an adjacent console element. The seats in some arrangements have the adjacent console element configured as a passenger utility element. Known seating arrangements allow for movement of the seats to different positions, as well provide different comfort features for passengers. However, these arrangements are often complex in design, adding time and cost to manufacture, installation, and assembly. Additionally, these known seating arrangements do not provide comfort features in all the different positions, which can affect the overall passenger experience.

Document GB 2469180 A, according to its abstract, states a seating arrangement comprising a pair of seats disposed alongside and secured to each other, wherein each seat comprises a backrest portion, and a seat pan portion. The pair of seats face at an acute angle to each other; the backrest portions of the respective seats are nearest the vertex of the acute angle than the seat pan portions. The seat pan portion of each seat may be separated from each other and an armrest located between the seat pan portions. A utility surface may be located between the seat pan portions. The utility surface may be supported by a base structure; movable between a raised position and a lowered position. The utility surface may provide an armrest when in the raised position. The utility surface, when in the lowered position, may define a continuous support surface with the seat pans of each adjacent seat. A secondary seat pan may be provided, positioned intermediate of and spanning between the seat pans of the two seats when in a first position.

Document EP 3 808 657 A1, according to its abstract, states an aircraft seat unit including a first seat, a second seat, an intermediate portion disposed between the first seat and the second seat, and a front wall adjacent to the intermediate portion. An axis line of the first seat and an axis line of the second seat are respectively disposed at angles that are oriented in mutually opposite directions with respect to a traveling direction. The intermediate portion is disposed in a space between the first set and the second seat and is capable of supporting a load of a bassinet placed thereon. The front wall includes engagement holes that detachably engage with engagement portions of the bassinet.

Document US 2020/0238880 A1, according to its abstract, states a deployable infill assembly and passenger seat construction. The infill assembly includes a cushion element deployable laterally along a low trajectory from a stowed position to a deployed position. The cushion assembly is coupled to a frame carrying guide tracks for guiding movement of the cushion assembly between the stowed and deployed positions. The cushion assembly is selectively deployable for use as a leg support, table or to complete a continuous bed. The infill assembly is packaged in a compact footprint well-suited for aircraft applications.

Document WO 2016/165978 A1, according to its abstract, states a seat module intended to be installed in the cabin of an aircraft, comprising a seat and a tray table that can move between a stowed position and a deployed position. The tray table can also move in translation and/or rotation in relation to the seat in order to move from the deployed position into a shifted deployed position.

### SUMMARY

According to the present disclosure, an aircraft according to claim 1 is provided. Further embodiments of the claimed invention are defined in the dependent claims. The claimed invention is only defined by the claims; the below embodiments, examples, and aspects are present for aiding in understanding the background and advantages of the claimed invention.

### BRIEF DESCRIPTION OF THE DRAWINGS

The various implementations, examples, and examples will become more fully understood from the detailed description given herein below and the accompanying drawings which are given by way of illustration only, and thus, are not limitative of the implementations, examples, and examples described herein, wherein:
Figures 1A to 1C show schematically in a rear view an implementation of a passenger utility element having a utility base element and an extension element in accordance with an example;
Figures 2A and 2B show schematically in perspective top views an implementation of a passenger seating arrangement having seat units arranged adjacent to each other in accordance with an example;
Figures 3A and 3B show schematically in perspective side views an implementation of a passenger seating arrangement having seat units arranged adjacent to each other in accordance with an example;
Figure 4 shows schematically in a top view an implementation of an aircraft cabin having a passenger seating arrangement having seat units in accordance with an example;
Figures 5A to 5C show schematically in top views an implementation of seat unit having a passenger seating arrangement in accordance with an example;
Figure 6 is a block diagram of an apparatus production and service method that advantageously employs various aspects of the disclosure in accordance with an example;
Figure 7 is a block diagram of an apparatus for which various aspects of the disclosure may be advantageously employed in accordance with an example; and
Figure 8 is a schematic perspective view of a particular flying apparatus in accordance with an example.

Corresponding parts are marked with the same reference symbols in all figures.

### DETAILED DESCRIPTION

The foregoing summary, as well as the following detailed description of certain examples and implementations will be better understood when read in conjunction with the appended drawings. As used herein, an element or step recited in the singular and preceded by the word "a" or "an" should be understood as not necessarily excluding the plural of the elements or steps. Further, references to "one example", "one implementation", or "one example" are not intended to be interpreted as excluding the existence of additional examples, implementations, or examples that also incorporate the recited features. Moreover, unless explicitly stated to the contrary, examples, implementations, or examples "comprising" or "having" an element or a plurality of elements having a particular property can include additional elements not having that property.

While various spatial and directional terms, such as "top," "bottom," "upper," "lower," "vertical," and the like are used to describe examples, it is understood that such terms are merely used with respect to the orientations shown in the drawings. The orientations can be inverted, rotated, or otherwise changed, such that a top side becomes a bottom side if the structure is flipped 180 degrees, becomes a left side or a right side if the structure is pivoted 90 degrees, and the like.

Certain implementations provide an improved passenger utility element for a seat, in particular an aircraft or vehicle seat, providing at least more utility features for a passenger while ensuring an additional comfort feature for the passenger, such as in different seat positions. In some examples, a passenger seating arrangement is improved, namely equipped with more comfort features, by arranging the seat units.

The passenger utility element as described in more detail herein includes components configured to be moved to different positions to allow different comfortable seating and sleeping arrangements for passengers (e.g., passengers on an aircraft). A utility base element and an extension element are provided, wherein the extension element is movable between a stowed position and a deployed use position relative to the base element, and wherein the extension element provides at least one cushioned support surface for a passenger when deployed.

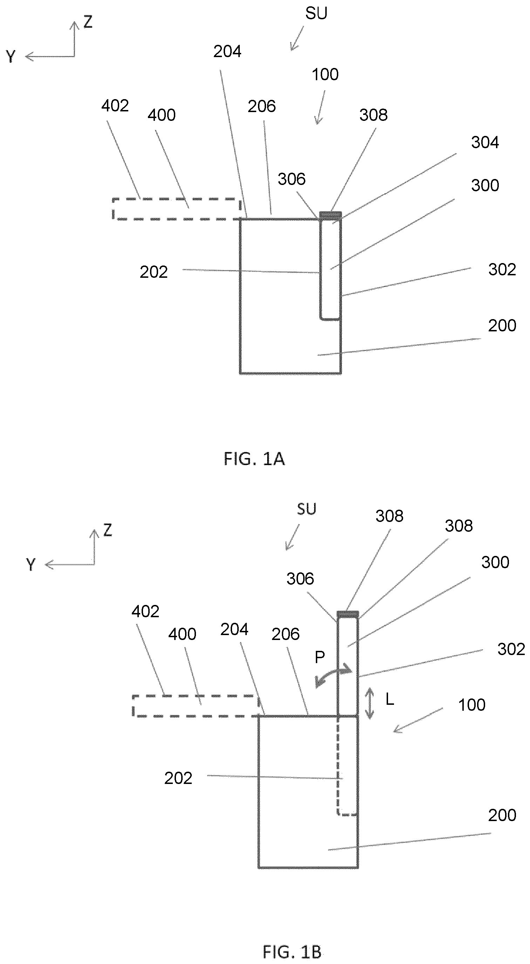

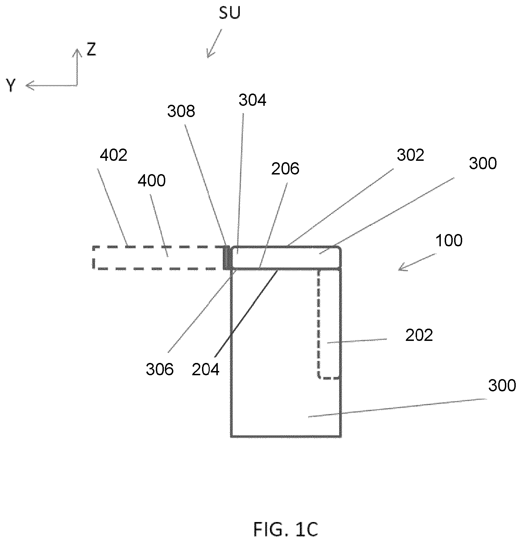

Figures 1A to 1C show schematically in a rear view an implementation of a passenger utility element 100 having a utility base element 200 and an extension element 300. The extension element 300 is operable to be moved between different positions as described in more detail herein. For example, Figure 1A shows the extension element 300 in a stowed position P1 within the utility base element 200. In this position, the extension element 300 is contained and housed within the utility. Figure 1B shows the extension element 300 in a deployed position P2, such as a fully pulled out or fully extended position, relative to the utility base element 200. In this position, the extension element 300 is extended laterally (illustrated by the arrow L) from the utility base element 200. Figure 1C shows the extension element 300 in a deployed use position P3. In this position, the extension element 300 is rotated (illustrated by the arrow R) and located adjacent the utility base element 200. In the illustrated example, in the deployed use position P3, the extension element 300 is rotated ninety degrees with respect to the position in the deployed position P2, thereby being oriented adjacent to the utility base element 200. In some examples, the utility base element 200 is a side element configured as a support structure and/or furniture structure, and the passenger utility element 100 is an add-on furniture part that can be added to any seat unit. That is, the passenger utility element 100 can be equipped to any seat unit.

It should be noted that the mechanisms to move the various components or parts described herein can be accomplished using any type of device or element. For example, rotational or translational movement of one or more components or parts can be provided using mechanical devices or structures that allow or provide for such movement. It should be appreciated that the mechanical mechanisms can be adapted or configured based on the particular configuration. Additionally, other mechanisms, such as magnetic elements can also be implemented in some examples to facilitate movement or other desired characteristics.

In one example, the passenger utility element 100 is a furniture part of a seat unit SU, illustrated as an aircraft seat unit SU, comprising at least a seat S and the passenger utility element 100 arranged adjacent to the seat S. The passenger utility element 100 in some examples is arranged on a lateral side of the seat S. The seat S is adjustable between at least a sitting position S1 and at least a bed position S2. The seat S comprises at least a seat pan 400 and a backrest 500. Additionally, the seat S in one example optionally comprises a leg-rest 600 and/or a headrest 700. In various examples, the seat S is operable to be brought into one or more positions, e.g. into a sitting position S1, such as a taxi, take-off, landing position, also known as "TTL" or "TT&L"-position, and an inclined position and/or a sleeping or bed position S2. In the bed position S2, the seat pan 400, the backrest 500 and optionally the leg-rest 600 and/or headrest 700 are brought into a substantially flat, horizontal position. That is, the seat pan 400, the backrest 500 and optionally the leg-rest 600 and/or headrest 700 are arranged and/or positioned to form a flat surface. As discussed in more detail herein, the extension element 300 is operable to move between different positions to be complementary to and facilitate passenger comfort in the sitting position S1 and the bed position S2 in various examples.

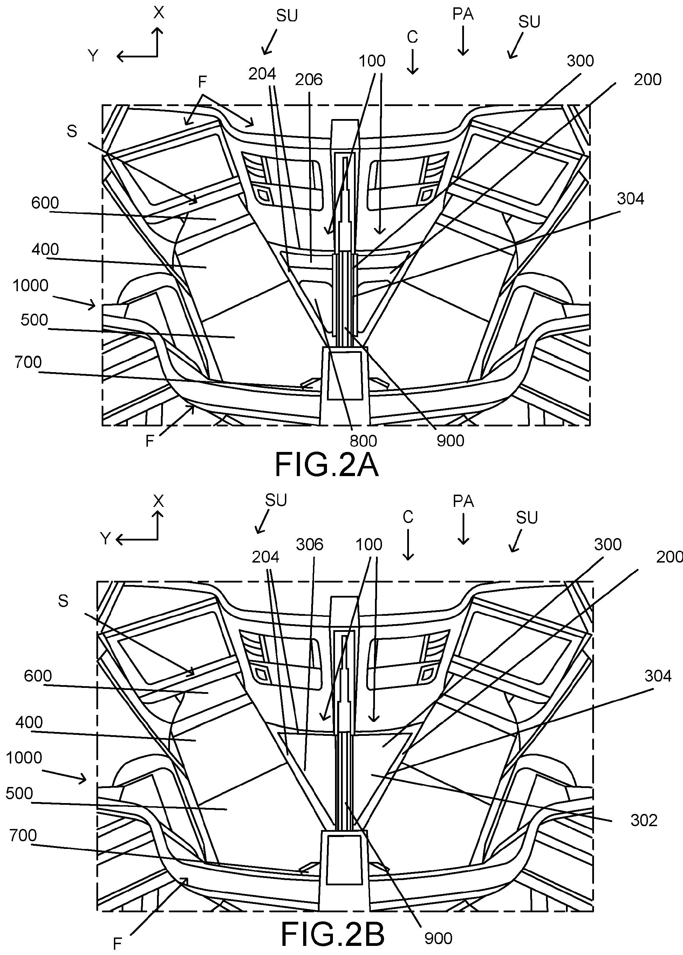

The seat S is movable between the sitting position S1 and the bed position S2, wherein a seat surface 402 (e.g., a surface for seating a passenger) of the seat S is in substantially horizontal alignment with a cushioned support surface 302 of the extension element 300 when the extension element 300 is deployed, in particular positioned in the deployed use position P3. In this example, when the seat S is positioned in the bed position S2, the cushioned support surface 302 is brought into horizontal alignment with the seat surface 402 and/or one or more other surfaces 502, 602, 702 of the different seat parts, namely the backrest 500 and optionally the leg-rest 600 and/or headrest 700 (as shown in Figures 2A to 3B). As can be seen, a lateral side of the seat S is configured to be arranged and/or positioned to be brought into contact with a lateral side surface 304 of the extension element 300.

Thus, the passenger utility element 100 includes at least the utility base element 200 and the extension element 300, wherein the extension element 300 is movable between the stowed position P1 and the deployed use position P3 relative to the utility base element 200 such that the extension element 300 provides at least the cushioned support surface 302 for a passenger when deployed. An opposite surface of the cushioned support surface 302 is arranged to be supported on the utility base element 200 in the illustrated example. In one example, the utility base element 200 includes a stowage space 202 in which the extension element 300 is positioned in the stowed position P1 (e.g., concealed or housed therein).

In some examples, the extension element 300 comprises an upholstery element. For example, the extension element 300 is covered with a cover, a trim or the like. In one implementation, at least the cushioned support surface 302 is covered by a material providing comfort characteristics, such as fabric and/or leather, and is padded in some examples. The extension element 300 is configured to be lightweight in some examples using lightweight material, such as synthetic material or textile, and/or different layers of material. Moreover, edges of the cushioned support surface 302 are slightly rounded in some examples.

In the illustrated example, the utility base element 200 is substantially box-shaped. For example, depending on the seat unit SU and/or a seat orientation within the seat unit SU and/or depending on an arrangement of furniture parts F (shown in Figures 2A to 5C), such as dividers or the like, the utility base element 200 can have a different shape. That is the shape, configuration, or other characteristics of the utility base element 200 can be varied as desired or needed. For example, the utility base element 200 in some examples is a triangular shape. Further, a height of the utility base element 200 is variable. For example, the height is adjusted, adapted or designed to correspond to a height of the seat S and/or dimensions of the extension element 300, such that when the seat S is positioned in the bed position S2, the cushioned support surface 302 is in horizontal, flat alignment with the seat surface 402 and/or the surfaces 502, 602, 702 of the seat S. That is, a height or thickness of the extension element 300 is configured to provide a flat or planar surface across these parts.

The extension element 300 in various examples has at least a form/shape that substantially corresponds to an outer form and/or outer periphery or circumference of the utility base element 200. That is, the configuration of the extension element 300 is complementary to the configuration of the utility base element 200. For example, outer edges 306 (defining edge portions) of the extension element 300 correspond to and/or are complementary to outer edges 204 (defining edge portions) of the utility base element 200 (e.g., sized or shaped to be arranged or positioned as described in more detail herein). In the deployed use position P3 of the extension element 300, the extension element 300 is at least supported by the edge portions 204 of the utility base element 200. For example, the edge portions 204 define a shoulder or engagement surface on which a portion of the extension element 300 is supported and maintained in the deployed use position P3. The corresponding edge portions 306, 204 of the extension element 300 and the utility base element 200 in some examples comprise a fastening device, such as a clip, snap-in, magnetic device to lock or fasten the extension element 300 in place when deployed relative to or on the utility base element 200. That is, a locking or coupling arrangement is thereby provided.

The extension element 300 comprises a pull-out flap 308. For example, the pull-out flap 308 is a textile element, such as a flexible textile or flexible band. The pull-out flap 308 is arranged on the lateral surface side 304 of the extension element 300. For example, the pull-out flap 308 in some examples is configured to be fastened to a counter element provided on the utility base element 200 (e.g., coupled to a complementary element or component). The pull-out flap 308 provides additional length and an added comfort feature in the various examples.

In the stowed position P1 of the extension element 300, the lateral side surface 304 is aligned with an upper surface 206 of the utility base element 200. The utility base element 200 in some examples comprises a lid covering an opening of the stowage space 202 for the extension element 300. That is, a cover or other enclosing element is configured to cover the opening of the stowage space 202 for the extension element 300 and conceal the extension element 300 therein. It should be appreciated that the opening also can be covered by the lid when the extension element 300 is deployed. As such, the stowage space 202 is covered to prevent, for example, items dropping therein. Further, the lid covers the lateral side surface 303 of the extension element 300 when stowed in various examples. In the stowed position P1 of the extension element 300, the extension element 300 is positioned vertically with respect to a cabin floor of an aircraft. In the deployed use position P3 of the extension element 300, the extension element 300 is positioned horizontally and substantially parallel to the floor.

In examples where the utility base element 200 comprises the stowage space 202 in which the extension element 300 is received in the stowed position, the utility base element 200 comprises an integrated recess or an external open space providing the stowage space 202 for the extension element 300. The extension element 300 is inserted into the stowage space 202 when stowed. For example, the extension element 300 is insertable into and extractable from the stowage space 202 in a cassette-like manner. As such, the extension element 300 is configured as a simple pull-out element in various examples.

Thus, in various examples, the extension element 300 is pivotably coupled (e.g., hinged) to the utility base element 200, such as in an area of the opening of the stowage space 202. The utility base element 200 further comprises a guide device (e.g., rails) for linear displacement of the extension element 300 relative to the utility base element 200 in some examples. That is, a structure that guides the movement of the extension element 300 during linear operation (to extend the extension element 300) is provided. It should be appreciated that the guide device can be any type of mechanism or structure that guides or restricts the movement of the extension element 300 in a particular direction. The guide device is arranged within the stowage space 202 in some examples.

Figures 2A and 2B show schematically in perspective top views an implementation of a passenger seating arrangement PA having two identical seat units SU arranged adjacent to each other. Each seat unit SU includes a seat S (shown in the bed position S2) and a passenger utility element 100 such as described herein. Figure 2A shows the extension element 300 in the vertical stowed position P1. Figure 2B shows the extension element 300 in the horizontal deployed use position P3.

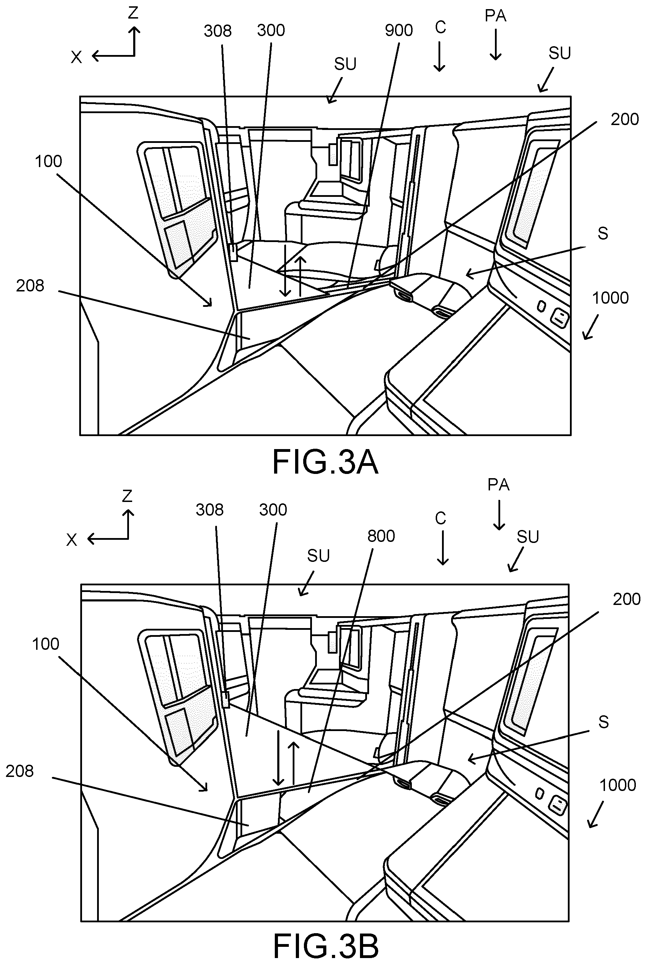

In one or more examples, the utility base element 200 comprises one or more storage compartments 208 (shown in Figures 3A and 3B) and/or at least an armrest 800. The armrest 800 in various examples is movable between an extended use position and a retracted non-use position A1 (as shown in Figures 2A and 2B). In the extended use position, the armrest 800 is raised, such that the armrest 800 is arranged above the seat pan 400 (e.g., positioned vertically higher than the seat pan 400). In some examples, the utility base element 200 comprises another stowage space for an armrest displacement mechanism. In the retracted non-use position A1, an upper surface of the armrest 800 is arranged in substantially horizontal alignment with the upper surface 206 of the utility base element 200. For example, the upper surface of the armrest 800 and the upper surface 206 of the utility base element 200 together providing a substantially planar surface (e.g., a flat surface). When the extension element 300 is arranged in the deployed use position P3, a flat or planar sitting and/or lying surface is thereby provided to the passenger. It should be noted that a size of the extension element 300 can vary, such as based on design requirements (e.g., customer requirements), a size of the utility base element 200, a desired configured, etc.

In the illustrated examples, the extension element 300 covers the entire upper surface 206 of the utility base element 200 and is also supported on the armrest 800 when the armrest 800 is in the deployed use position P3. Further, the cushioned support surface 302 of the extension element 300 creates a bed extension surface. That is, the cushioned support surface 302 of the extension element 300 defines an extended planar surface adjacent to the main planar surface (e.g., a side surface adjacent to the sleeping surface). In various examples, a height of the entire passenger utility element 100 with the extension element 300 when in the deployed use position P3 corresponds to a height of the seat S in the bed position S2. That is, the heights of each are complementary and aligned to create or form a planar or flat surface. In some examples, this configuration defines a substantially continuous planar or flat surface for use by the passenger (with minimal gaps between the elements).

Thus, one or more examples provide a utility furniture to a passenger with one or more additional comfort features, whereas the passenger can extend the extension element 300 to provide an extended bed and support surface for the passenger as described in more detail herein. That is, the extension element 300 can be exposed for used by the passenger. In one example, the cushioned support surface 302 can be used as a bed extension surface when the seat S is positioned in a flat-bed orientation that is a substantially horizontal sleeping position. The cushioned support surface 302 can also be used as an additional sitting surface for the passenger or another passenger and/or lying surface for an additional passenger, such as a toddler, next to the respective seat of the seat unit. For example, when the respective seat is in the sitting position, the extension element 300 can be used as additional seat or lying surface. The other passenger may be a friend, a relative or a toddler of the passenger of the seat unit. When the extension element 300 is stored, the utility base element 200 can be used as a common console or side element providing a number of utility features, such as a shelf, storage compartments, a tabletop, an armrest or the like.

It should be appreciated that the cushioned support surface 302 of the extension element 300 can also be used as a shelf or a storage area, for example for items of the passenger. Moreover, the extension element 300 can be configured as a lid or a flap which can cover up at least an open storage compartment of the utility base element 200 as described in more detail herein. For example, the storage compartment is opened towards a passenger (e.g., the storage compartment is a recess facing in a direction towards a ceiling of the vehicle or aircraft) and can be covered as described in more detail herein.

In some examples, the seat units SU are divided by a privacy center divider 900, such as an adjustable screen, for example a telescopic adjustable screen with one or more adjustable screen parts that are movably arranged relative to each other. In one example, when the center divider 900 is in a fully retracted non-use position A1 as shown in Figure 3A, a substantially continuous surface is provided between both seat units SU when the extension elements 300 are in the deployed use position P3. That is, a larger planar or flat surface is thereby defined.

In various examples, each seat unit SU includes one or more furniture parts F and/or structural components. For example, each seat unit SU includes at least a console 1000 forming a footwell for a passenger seated behind and/or a utility surface for a corresponding passenger of the seat unit SU. In some implementations, the furniture parts F comprise wall structures, such as separating walls and carrier parts for displays or the like. For example, the console 1000 and/or the footwell defines an open space. In particular, the open space is arranged at a rear side of the footwell facing towards the passenger seated behind another passenger in some examples, such that the footwell is accessible for a rear passenger. The leg-rest 600 in some examples is positioned within the footwell in the bed position S2 of the seat S.

In the illustrated example, each seat units SU is configured as an angled seat unit SU, wherein each longitudinal axis of each seat S is angled relative to a longitudinal axis of a vehicle cabin C. The seats S of an angled seat unit SU can be angled inwardly or outwardly, and at one or more different angles. For example, as shown, each respective passenger utility element 100 is arranged in an inner area of the corresponding seat unit SU, adjacent to the center divider 900 or a cabin wall, and each console 1000 is arranged in an outer area, e.g. adjacent an aisle. In this implementation, the seats S are facing aisles of the vehicle (e.g., angled towards an adjacent aircraft aisle).

Different configurations and operational examples of one or more examples will now be described. With particular reference to Figures 3A and 3B that show schematically in perspective side views an implementation of a passenger seating arrangement PA having two identical seat units SU arranged adjacent to each other, each seat unit SU includes a seat S and a passenger utility element 100. Figure 3A shows the extension element 300 in a deployed intermediate position P4 with respect to the utility base element 200. Figure 3B shows the extension element 300 in the deployed position P2 before pivoting the extension element 300 relative to the utility base element 200 into the deployed use position P3 or after pivoting the extension element 300 from the deployed use position P3. That is, Figure 3B illustrates the extension element 300 in a position ready to be pivoted from the deployed position P2 to the deployed use position P3. Also, the armrest 800 in this example is shown in the retracted non-use position A1.

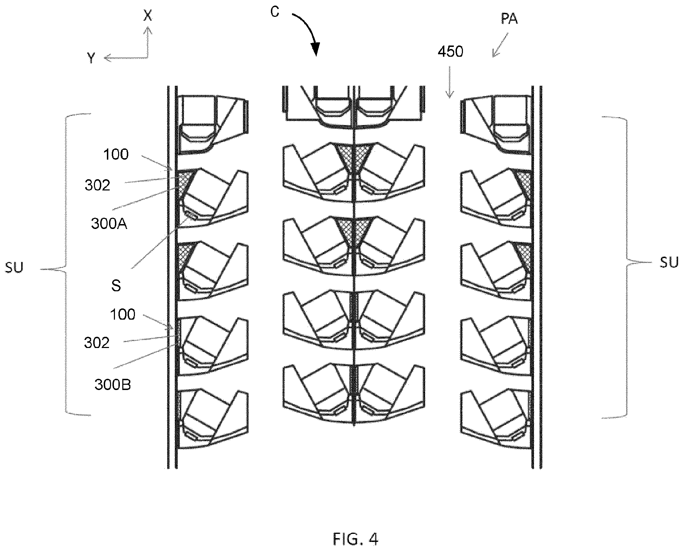

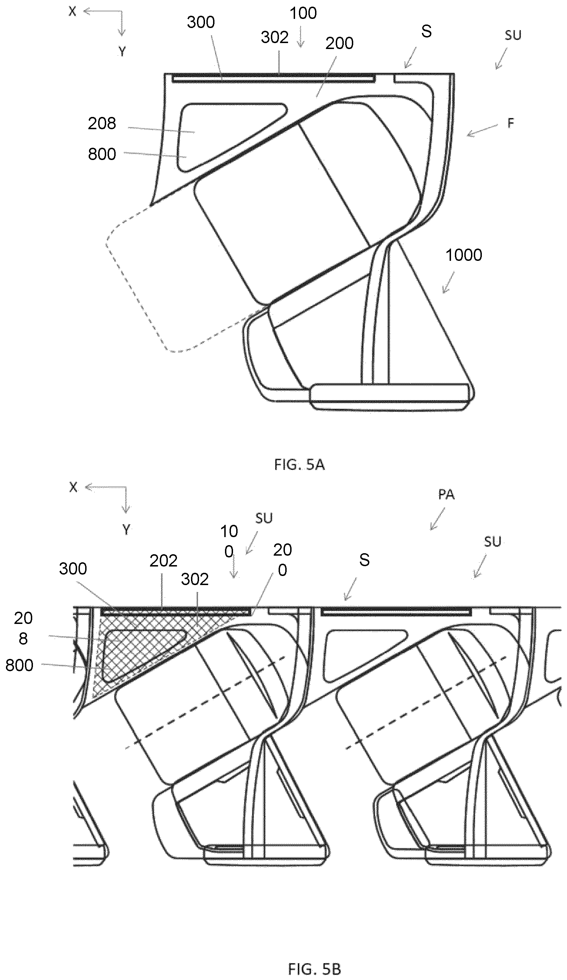

Figure 4 shows schematically in a top view an implementation of vehicle cabin C, illustrated as an aircraft cabin C, comprising a passenger seating arrangement PA with a plurality of seat units SU, wherein the angled seats S face in a direction towards an aisle 450. In this example, the passenger utility elements 100 are configured shorter in a longitudinal direction of the cabin C than the passenger utility elements 100 of Figures 2A, 2B and 5A to 5C. In the illustrated example, the extension element 300A is shown in the deployed use position P3 wherein the passenger is able to use the cushioned support surface. The extension element 300B is shown in the stowed position P1. The seats S are shown in the sitting position S1. As should be appreciated, the configuration of the passenger utility elements 100 can be varied, such as the dimensions, shape, etc. based on the particular application (e.g., type of aircraft or cabin).

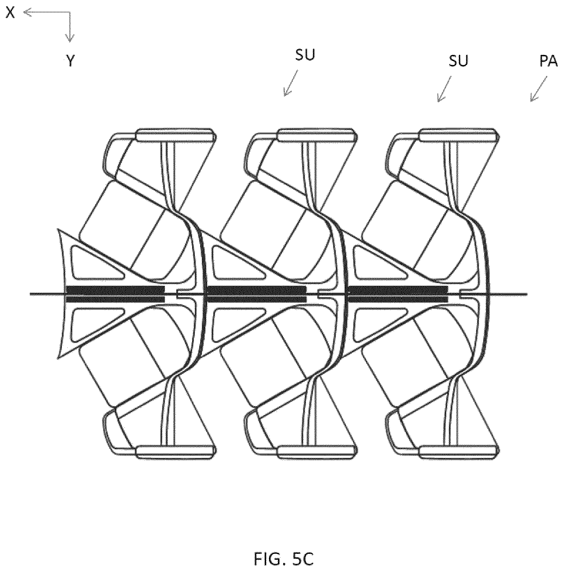

Figures 5A to 5C show schematically in top views an implementation of a seat unit SU (Figure 5A), a passenger seating arrangement PA (Figure 5B) having two identical seat units SU arranged one behind another, and a passenger seating arrangement PA (Figure 5C) having a plurality of seat units SU arranged one behind another and adjacent to each other. That is, different configuration are illustrated in the figures and represent different possible arrangements. However, the seating configurations are merely examples and different configurations are contemplated, such as having a different number of seat units SU, a different orientation of seat units SU, etc. The passenger utility elements 100 in this example are configured having dimensions that fill a gap between each seat unit SU arranged one behind another in longitudinal direction of the cabin C. That is, an abutting arrangement of each seat unit in the longitudinal direction is provided, which maximizes the use of space in various examples.

In Figure 5A, the extension element 300 is shown in the stowed position P1 with the seat S in the sitting position S1. The dashed lines illustrates the bed position S2, namely the extended position for the seat pan 400. In Figure 5B, the extension element 300 is likewise shown in the stowed position P1 with the seat S in the sitting position S1. Additionally, the armrest 800 is in the retracted non-use position A1 (illustrated by the hash lines). Figure 5C illustrates a plurality of seats S in the same position as shown in Figure 5A.

Thus, various implementations as described in one or more examples provide seats, which are in seat units in one or more examples, that are movable to different positions. As such, passengers can easily adapt the seating spacing to a particular use or configuration that includes one or more comfort features. For example, the passenger utility element 100 includes the extension element 300 that has at least one cushioned support surface 302 for a passenger when deployed.

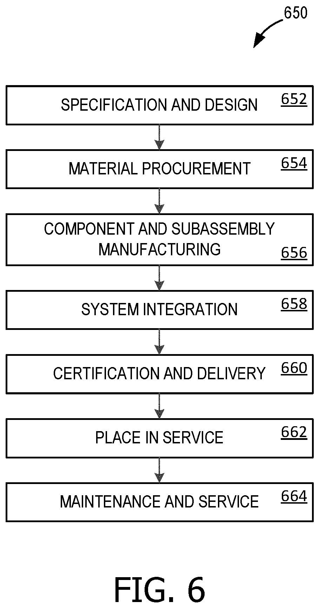

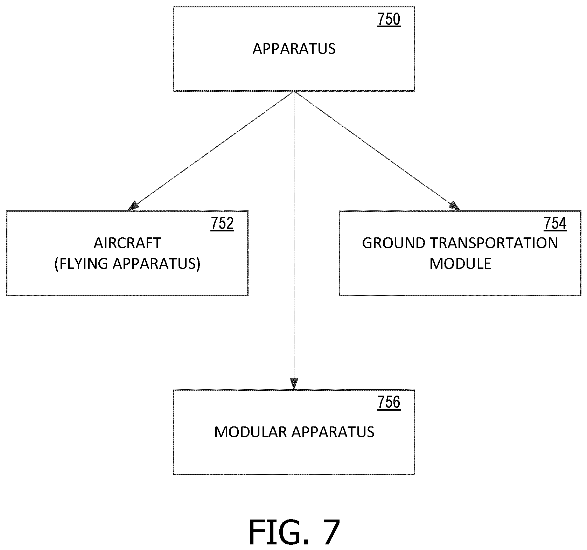

Some examples of the disclosure are used in manufacturing and service applications as shown and described in relation to Figures 6 to 8. Thus, examples of the disclosure are described in the context of an apparatus of manufacturing and service method 650 shown in Figure 6 and an apparatus 750 shown in Figure 7. In Figure 6, a diagram illustrating an apparatus manufacturing and service method 650 is depicted in accordance with an example. In one example, during pre-production, the apparatus manufacturing and service method 650 includes specification and design 602 of the apparatus 700 and material procurement 654. During production, component, and subassembly manufacturing 656 and system integration 658 of the apparatus 750 takes place. Thereafter, the apparatus 700 goes through certification and delivery 660 in order to be placed in service 662. While in service by a customer, the apparatus 750 is scheduled for routine maintenance and service 664, which in one example, includes modification, reconfiguration, refurbishment, and other maintenance or service subject to configuration management, described herein.

In one example, each of the processes of the apparatus manufacturing and service method 600 are performed or carried out by a system integrator, a third party, and/or an operator. In these examples, the operator is a customer. For the purposes of this description, a system integrator includes any number of apparatus manufacturers and major-system subcontractors; a third party includes any number of venders, subcontractors, and suppliers; and in one example, an operator is an owner of an apparatus or fleet of the apparatus, an administrator responsible for the apparatus or fleet of the apparatus, a user operating the apparatus, a leasing company, a military entity, a service organization, or the like.

With reference now to Figure 7, the apparatus 750 is provided. As shown in Figure 7, an example of the apparatus 750 is a flying apparatus 752, such as an aerospace vehicle, aircraft, air cargo, flying car, and the like. As also shown in Figure 7, a further example, not falling within the scope of the claims, of the apparatus 750 is a ground transportation apparatus 754, such as an automobile, a truck, heavy equipment, construction equipment, a boat, a ship, a submarine, and the like. A further example, not falling within the scope of the claims, of the apparatus 750 shown in Figure 7 is a modular apparatus 756 that comprises at least one or more of the following modules: an air module, a payload module, and a ground module. The air module provides air lift or flying capability. The payload module provides the capability of transporting objects such as cargo or live objects (people, animals, etc.). The ground module provides the capability of ground mobility. The disclosed solutions and examples herein can be applied to each of the modules separately or in groups, such as air and payload modules, or payload and ground modules, etc. or all modules.

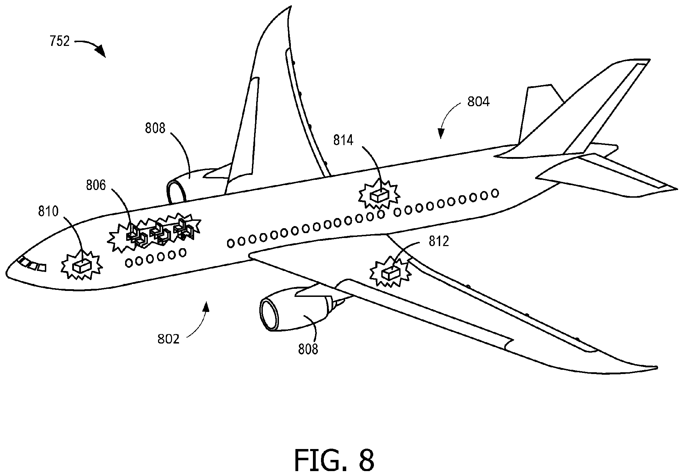

With reference now to Figure 8, a more specific diagram of the flying apparatus 702 is depicted in which an implementations of the disclosure are advantageously employed. In this example, the flying apparatus 702 is an aircraft produced by the apparatus manufacturing and service method 600 in Figure 6 and includes an airframe 802 with a plurality of systems 804 and an interior 806, which can include seats and the passenger utility element 100. Examples of the plurality of systems 804 include one or more of a propulsion system 808, an electrical system 810, a hydraulic system 812, and an environmental system 814. However, other systems are also candidates for inclusion.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Any range or value given herein can be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above can relate to one example or can relate to several examples. The examples are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts. The terms "comprising," "including," and "having" are intended to be inclusive and mean that there can be additional elements other than the listed elements. In other words, the use of "including," "comprising," "having," "containing," "involving," and variations thereof, is meant to encompass the items listed thereafter and additional items. Further, references to "one implementation" are not intended to be interpreted as excluding the existence of additional implementations that also incorporate the recited features. The term "exemplary" is intended to mean "an example of".

When introducing elements of aspects and implementations of the disclosure or the examples thereof, the articles "a," "an," "the," and "said" are intended to mean that there are one or more of the elements. In other words, the indefinite articles "a", "an", "the", and "said" as used in the specification and in the claims, unless clearly indicated to the contrary, should be understood to mean "at least one."

The phrase "one or more of the following: A, B, and C" means "at least one of A and/or at least one of B and/or at least one of C." The phrase "and/or", as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one implementation, to A only (optionally including elements other than B); in another implementation, to B only (optionally including elements other than A); in yet another implementation, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e. "one or the other but not both") when preceded by terms of exclusivity, such as "either," "one of' "only one of or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one implementation, to at least one, optionally including more than one, A, with no B present (and optionally including elements other than B); in another implementation, to at least one, optionally including more than one, B, with no A present (and optionally including elements other than A); in yet another implementation, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed.

Ordinal terms are used merely as labels to distinguish one claim element having a certain name from another element having a same name (but for use of the ordinal term), to distinguish the claim elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

It is to be understood that the above description is intended to be illustrative, and not restrictive. For example, the above-described implementations (and/or aspects thereof) can be used in combination with each other. In addition, many modifications can be made to adapt a particular situation or material to the teachings of the various implementations of the disclosure without departing from their scope. While the dimensions and types of materials described herein are intended to define the parameters of the various implementations of the disclosure, the implementations are by no means limiting and are example implementations. Many other implementations will be apparent to those of ordinary skill in the art upon reviewing the above description. The scope of the various implementations of the disclosure should, therefore, be determined with reference to the appended claims.

In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various implementations of the disclosure, including the best mode, and also to enable any person of ordinary skill in the art to practice the various implementations of the disclosure, including making and using any devices or systems and performing any incorporated methods. The patentable scope of the various implementations of the disclosure is defined by the claims, and can include other examples that occur to those persons of ordinary skill in the art.

## Claims

1. An aircraft comprising a cabin floor and a seat (S) having a passenger utility element (100), the passenger utility element (100) comprising:
a utility base element (200); and
an extension element (300), wherein the extension element (300) is movable between a stowed position (P1) and a deployed use position (P3) relative to the utility base element (200), wherein in the stowed position, the extension element is positioned within the utility base element (200) and positioned vertically with respect to the cabin floor, wherein in the deployed use position the extension element is positioned horizontally and substantially parallel to the cabin floor, and wherein the extension element (300) comprises a cushioned support surface (302) configured to be exposed in the deployed use position (P3), **characterised in that**
the extension element (300) comprises a pull-out flap (308), wherein in the stowed position of the extension element (300), a lateral side surface (304) of the extension element (300) is aligned with an upper surface (206) of the utility base element, wherein the pull-out flap (308) is arranged on the lateral surface side (304) of the extension element (300).

2. The aircraft of claim 1, wherein the utility base element (200) comprises a stowage space (202) configured to receive the extension element (300) therein in the stowed position.

3. The aircraft of claim 1 or 2, wherein the extension element (300) comprises an upholstery element.

4. The aircraft of any of claims 1 to 3, wherein the utility base element (200) is substantially box-shaped.

5. The aircraft of any of claims 1 to 4, wherein in the deployed use position of the extension element (300), the cushioned support surface (302) of the extension element (300) is positioned horizontally and substantially parallel to the cabin floor.

6. The aircraft of any of claims 1 to 5, wherein the utility base element comprises edge portions and in the deployed use position of the extension element, the extension element is supported by the edge portions of the utility base element.

7. The aircraft of any of claims 1 to 6, wherein the extension element is pivotably coupled to the utility base element.

8. The aircraft of any of claims 1 to 7, further comprising at least a guide device configured to guide a linear displacement of the extension element relative to the utility base element.

9. The aircraft of any of claims 1 to 8, wherein the utility base element comprises at least one of a storage compartments and an armrest.

10. The aircraft of any of claims 1 to 9, further comprising a fastening device configured to fasten the extension element on the utility base element.

11. The aircraft of any of claims 1 to 10, wherein the pull-out flap (308) is extendable from the cushioned support surface (302).

## Patentansprüche

1. Flugzeug, umfassend einen Kabinenboden und einen Sitz (S), der ein Passagiernutzelement (100) aufweist, das Passagiernutzelement (100) umfassend:
ein Nutzbasiselement (200); und
ein Verlängerungselement (300), wobei das Verlängerungselement (300) zwischen einer verstauten Position (P1) und einer ausgefahrenen Gebrauchsposition (P3) relativ zu dem Nutzbasiselement (200) bewegbar ist, wobei das Verlängerungselement in der verstauten Position innerhalb des Nutzbasiselements (200) positioniert und vertikal in Bezug auf den Kabinenboden positioniert ist,
wobei das Verlängerungselement in der ausgefahrenen Gebrauchsposition horizontal und im Wesentlichen parallel zu dem Kabinenboden positioniert ist, und wobei das Verlängerungselement (300) eine gepolsterte Stützoberfläche (302) umfasst, die konfiguriert ist, um in der ausgefahrenen Gebrauchsposition (P3) freizuliegen, **dadurch gekennzeichnet, dass**
das Verlängerungselement (300) eine Ausziehklappe (308) umfasst,
wobei in der verstauten Position des Verlängerungselements (300) eine laterale Seitenoberfläche (304) des Verlängerungselements (300) mit einer oberen Oberfläche (206) des Nutzbasiselements ausgerichtet ist, wobei die Ausziehklappe (308) an der lateralen Seitenoberfläche (304) des Verlängerungselements (300) angeordnet ist.

2. Flugzeug nach Anspruch 1, wobei das Nutzbasiselement (200) einen Stauraum (202) umfasst, der konfiguriert ist, um das Verlängerungselement (300) darin in der verstauten Position aufzunehmen.

3. Flugzeug nach Anspruch 1 oder 2, wobei das Verlängerungselement (300) ein Polsterelement umfasst.

4. Flugzeug nach einem der Ansprüche 1 bis 3, wobei das Nutzbasiselement (200) im Wesentlichen kastenförmig ist.

5. Flugzeug nach einem der Ansprüche 1 bis 4, wobei in der ausgefahrenen Gebrauchsposition des Verlängerungselements (300) die gepolsterte Stützoberfläche (302) des Verlängerungselements (300) horizontal und im Wesentlichen parallel zu dem Kabinenboden positioniert ist.

6. Flugzeug nach einem der Ansprüche 1 bis 5, wobei das Nutzbasiselement Randabschnitte umfasst und das Verlängerungselement in der ausgefahrenen Gebrauchsposition des Verlängerungselements durch die Randabschnitte des Nutzbasiselements gestützt wird.

7. Flugzeug nach einem der Ansprüche 1 bis 6, wobei das Verlängerungselement schwenkbar mit dem Nutzbasiselement gekoppelt ist.

8. Flugzeug nach einem der Ansprüche 1 bis 7, ferner umfassend mindestens eine Führungsvorrichtung, die konfiguriert ist, um eine lineare Verschiebung des Verlängerungselements relativ zu dem Nutzbasiselement zu führen.

9. Flugzeug nach einem der Ansprüche 1 bis 8, wobei das Nutzbasiselement mindestens eines von einem Staufach und einer Armlehne umfasst.

10. Flugzeug nach einem der Ansprüche 1 bis 9, ferner umfassend eine Befestigungsvorrichtung, die konfiguriert ist, um das Verlängerungselement an dem Nutzbasiselement zu befestigen.

11. Flugzeug nach einem der Ansprüche 1 bis 10, wobei die Ausziehklappe (308) aus der gepolsterten Stützoberfläche (302) verlängerbar ist.

## Revendications

1. Aéronef comprenant un plancher de cabine et un siège (S) ayant un élément utilitaire pour passager (100), l'élément utilitaire pour passager (100) comprenant :
un élément de base utilitaire (200) ; et
un élément d'extension (300), dans lequel l'élément d'extension (300) est mobile entre une position de rangement (P1) et une position d'utilisation déployée (P3) par rapport à l'élément de base utilitaire (200), dans lequel dans la position de rangement, l'élément d'extension est positionné à l'intérieur de l'élément de base utilitaire (200) et positionné verticalement par rapport au plancher de la cabine, dans lequel dans la position d'utilisation déployée, l'élément d'extension est positionné horizontalement et sensiblement parallèle au plancher de cabine, et dans lequel l'élément d'extension (300) comprend une surface de support capitonnée (302) conçue pour être exposée dans la position d'utilisation déployée (P3), **caractérisé en ce que**
l'élément d'extension (300) comprend un rabat d'extraction (308),
dans lequel, dans la position de rangement de l'élément d'extension (300), une surface latérale (304) de l'élément d'extension (300) est alignée sur une surface supérieure (206) de l'élément de base utilitaire, dans lequel le rabat d'extraction (308) est disposé sur la surface latérale (304) de l'élément d'extension (300).

2. Aéronef selon la revendication 1, dans lequel l'élément de base utilitaire (200) comprend un espace de rangement (202) conçu pour recevoir l'élément d'extension (300) dans celui-ci dans la position de rangement.

3. Aéronef selon la revendication 1 ou 2, dans lequel l'élément d'extension (300) comprend un élément de rembourrage.

4. Aéronef selon l'une quelconque des revendications 1 à 3, dans lequel l'élément de base utilitaire (200) est sensiblement en forme de boîte.

5. Aéronef selon l'une quelconque des revendications 1 à 4, dans lequel, dans la position d'utilisation déployée de l'élément d'extension (300), la surface de support capitonnée (302) de l'élément d'extension (300) est positionnée horizontalement et sensiblement parallèle au plancher de cabine.

6. Aéronef selon l'une quelconque des revendications 1 à 5, dans lequel l'élément de base utilitaire comprend des parties de bord et, dans la position d'utilisation déployée de l'élément d'extension, l'élément d'extension est supporté par les parties de bord de l'élément de base utilitaire.

7. Aéronef selon l'une quelconque des revendications 1 à 6, dans lequel l'élément d'extension est accouplé de manière pivotante à l'élément de base utilitaire.

8. Aéronef selon l'une quelconque des revendications 1 à 7, comprenant en outre au moins un dispositif de guidage conçu pour guider un déplacement linéaire de l'élément d'extension par rapport à l'élément de base utilitaire.

9. Aéronef selon l'une quelconque des revendications 1 à 8, dans lequel l'élément de base utilitaire comprend au moins l'un parmi des compartiments de stockage et un accoudoir.

10. Aéronef selon l'une quelconque des revendications 1 à 9, comprenant en outre un dispositif de fixation conçu pour fixer l'élément d'extension sur l'élément de base utilitaire.

11. Aéronef selon l'une quelconque des revendications 1 à 10, dans lequel le rabat d'extraction (308) est extensible à partir de la surface de support capitonnée (302).
